(19) Europäisches Patentamt
European Patent Office
Office européen des brevets

(11) **EP 1 095 954 A1**

(12) **EUROPEAN PATENT APPLICATION**
published in accordance with Art. 158(3) EPC

(43) Date of publication:
02.05.2001 Bulletin 2001/18

(51) Int. Cl.[7]: **C08F 291/00**, C08F 265/06
// C08F291:00, C08F220:14,
C08F265:06, C08F220:14

(21) Application number: 98928519.2

(22) Date of filing: 17.06.1998

(86) International application number:
PCT/JP98/02664

(87) International publication number:
WO 99/65964 (23.12.1999 Gazette 1999/51)

(84) Designated Contracting States:
DE

(71) Applicant:
Mitsubishi Rayon Co., Ltd.
Tokyo 108-8506 (JP)

(72) Inventors:
• MATSUDA, Kaoru,
Otake Plants
Otake-shi, Hiroshima 739-0606 (JP)

• MAKINO, Hideaki,
Otake Plants
Otake-shi, Hiroshima 739-0606 (JP)

(74) Representative:
Jones, Helen Marjorie Meredith
Gill Jennings & Every,
Broadgate House,
7 Eldon Street
London EC2M 7LH (GB)

(54) **IMPACT-RESISTANT ACRYLIC POLYMER PELLETS AND PROCESS FOR PRODUCING THEM**

(57) An impact resistant acrylic polymer pellet comprising an acrylic multi-layer polymer having at least one rubber-like elastomer layer ($\alpha$) as an inner layer and having a rigid polymer layer ($\beta$) as an outermost layer which is containing methyl methacrylate as a main component, wherein the proportion of parts insoluble in acetone including the polymer of the rubber-like elastomer layer ($\alpha$) is from 70 to 97% by weight per unit weight of the pellet, and a method for producing the same are disclosed. The pellet is excellent in handling property, and has high content of a rubber-like elastomer.

**F I G. 1**

## Description

TECHNICAL FIELD

The present invention relates to an impact resistant acrylic polymer pellet having excellent handling property and high proportion of a rubber-like elastomer and a method for producing the same.

BACKGROUND ART

A methacrylic resin has excellent weather resistance, gloss and transparency, and on the other hand, has a demerit that impact resistance is low. Then, for imparting impact resistance while maintaining weather resistance, introduction of an acrylic elastomer is listed. For example, there are known methods in which an acrylic two-layer structure polymer composed of two layers of a rubber-like polymer and a rigid polymer or an acrylic three-layer structure polymer composed of three layers of a semi-rubber-like polymer, a rubber-like polymer and a rigid polymer is compounded in a methacrylic resin (USP 3,808,180, 3,843,753 and 4,730,023, and Japanese Patent Application Laid-Open (JP-A) No. 62-230841).

Such an acrylic multi-layer polymer is a polymer in the form of a powder obtained by coagulating, dehydrating and drying a latex of an acrylic multi-layer polymer produced by an emulsion polymerization method. On the other hand, there is also known a method in which a mixture of a water-containing polymer comprising a rubber component is supplied to a compression dehydration extruder, the mixture is dehydrated, kneaded and melted in a barrel, then, the mixture is taken out from the open end of the barrel as a granular powder (JP-A No. 4-139202).

The present inventors have studied the powder structure of a coagulated powder excellent in drying efficiency of a relatively rigid acrylic multi-layer polymer, and as a result, found that the coagulated powder having specific void structure and a relatively small proportion of fine powders is suitable for a drying method by a compression dehydration extruder and the like and that it shows excellent drying efficiency. Namely, among coagulated powders obtained by coagulating an emulsified latex of an acrylic multi-layer polymer, a powder in which the proportion of fine particles having a particle size of 212 μm or less is 40% by weight or less and the volume of voids having a pore size of 5 μm or less measured by a mercury pressure method after the coagulated powder is dried is 0.7 ml or less per one gram of dried polymer is suitable for a drying method by a compression dehydration extruder and the like, and form this powder, an acrylic multi-layer polymer in the form of a granule is obtained by a compression dehydration extruder (JP-A No. 8-245854: USP 5,521,252).

An impact resistant acrylic resin composition which comprise an acrylic multi-layer polymer and a methacrylic resin is obtained in the form of a pellet by mixing an acrylic multi-layer polymer in the form of a powder or a granule with a methacrylic polymer bead formed according to a suspension polymerization method or a methacrylic polymer pellet formed according to a bulk polymerization method, and then, with an extruder, melting and plasticizing the mixture, extruding it continuously through a dice situated at the leading point, and cutting the extruded melted strand.

However, this method has a problem that dust flies in blending with a methacrylic resin and workability is inferior when an acrylic multi-layer polymer in the form of a powder is used. Further, when an acrylic multi-layer polymer in the form of a granule is used, the flying of dust and the like are somewhat improved as compared with the case in which a powder is used, however, the improvement is not sufficient. Therefore, the acrylic multi-layer polymer is desirably in the form of a pellet excellent in handling property.

On the other hand, a technology is required which can produce an impact resistant acrylic resin by using as a master pellet composed of a composition containing an acrylic multi-layer polymer and a methacrylic resin and adding this master pellet in small amount to a methacrylic resin. To meet this requirement, an acrylic multi-layer polymer or a master pellet having high proportion of a rubber-like elastomer is necessary to be provided.

However, in the conventional method for producing a pellet in which an acrylic multi-layer polymer in the form of a powder or granule and a methacrylic resin are mixed and the mixture is extruded by using a usual extruder, there have been problems regarding quality that, when the proportion of a rubber-like elastomer is about 40 to 50% or more, the extrusion of strand tends to be unstable and thermal degradation occurs which causes it to be colored and to deteriorate the physical properties. Namely, as examples of pellet (or master pellet) containing an acrylic multi-layer polymer that are specifically described in the examples of the prior literatures, there is listed only pellets having as low proportion of a rubber-like elastomer as 30% (JP-A No. 62-230841) and 17.5% (JP-A No. 5-17654), and pellets having proportion of a rubber-like elastomer of 50% or more are not described at all.

Incidentally, as a technology for producing a pellet containing a rubber component, there is for example known a method in which polymer slurry obtained by coagulating a graft polymer latex prepared by graft-polymerizing a vinyl monomer with a diene-based rubber-like polymer in an emulsified latex is directly supplied to a compression dehydration extruder, dehydrated, kneaded, melted and plasticized in a barrel, and extruded continuously as a strand through a dice situated at the leading point of the extruder, and the extruded strand is cut to produce an ABS-based resin in the form of a pellet. Further, there is also known a method in which a mixture of such polymer slurry with vinyl-based polymer slurry obtained by a suspension polymerization or bulk polymerization method is supplied to a compression dehydration extruder and an ABS-based resin in the form of a pellet is produced in the same manner as described above (Japanese Patent Application Publication (JP-B) No. 59-37021).

However, an ABS-based resin has melting property remarkably different from that of a methacrylic resin. Thus, although such a compression dehydration extrusion technology is suitable for a soft polymer which is relatively easily melted such as an ABS-based resin, it is not suitable for a rigid polymer such as an acrylic polymer.

Namely, for giving impact resistance to an acrylic multi-layer polymer without sacrificing gloss and transparency inherent in a methacrylic resin, it is necessary that the proportion of a rubber-like component such as an alkyl acrylate in the acrylic multi-layer polymer is decreased, and that the proportion of a rigid component such as an alkyl methacrylate is increased relatively. The reason for this is that when the proportion of a rubber-like component is relatively large, variation in refractive index against temperature increases and optical properties deteriorate. Therefore, such an acrylic multi-layer polymer is necessarily produced as a rigid polymer, and there are tendencies that melt-adhesion of polymer particles with each other in an emulsified latex does not easily occur in coagulating, and the water-content of a recovered polymer in wet condition is relatively large.

Then, from viewpoints of practical use of an impact resistant acrylic resin, the impact resistant acrylic resin is used widely for sign boards and front plates of automatic vending machines, visors for automobiles and the like since the resin provides a molded article having excellent appearance and has impact resistance, and abilities required for the resin including weather resistance are increasingly becoming higher. Therefore, in general, in producing a composition by mixing an acrylic multi-layer polymer and a methacrylic resin, a method is used in which appearance and weather resistance are further improved by adding further organic stabilizers. In such a method, there are problems that when the kinds of stabilizers used are plentiful, much labors are required, productivity decreases leading to increase in production cost, and in the case when environment in adding stabilizers is polluted, and the like, the resulted acrylic resin composition is polluted and abilities thereof are decreased, and the like. Therefore, an impact resistance acrylic polymer is desired to which organic stabilizers have been added previously. Namely, it is preferable that organic stabilizer are added, depending on occasions, to a master pellet having high proportion of a rubber-like elastomer.

That is to say, there has been conventionally known no technology which can provide a master pellet having high proportion of rubber comprising an acrylic multi-layer polymer.

DISCLOSURE OF INVENTION

An object of the present invention is to provide an impact resistant acrylic polymer in the form of a pellet having excellent handling property and having high proportion of a rubber-like elastomer.

A further object of the present invention is to provide a method which can produce an impact resistant acrylic polymer in the form of a pellet with excellent productivity and low cost without polluting the resin since workability thereof is excellent and production process can be remarkably simplified.

The present inventors have found that a master pellet having high proportion of a rubber-like elastomer can be produced by further improving the above-described technology for drying a powder of an acrylic multi-layer polymer using a compression dehydration extruder (JP-A No. 8-245854: USP 5,521,252) and by allowing an acrylic multi-layer polymer to be melted and plasticized to form a pellet in a specific method, completing the present invention.

The above-described object of the present invention can be accomplished by an impact resistant acrylic polymer pellet comprising an acrylic multi-layer polymer having at least one rubber-like elastomer layer ($\alpha$) as an inner layer and having a rigid polymer layer ($\beta$) as an outermost layer which is containing methyl methacrylate as a main component, wherein the proportion of parts insoluble in acetone including the polymer of the rubber-like elastomer layer ($\alpha$) is from 70 to 97% by weight per unit weight of the pellet.

Particularly, in the impact resistant acrylic polymer of the present invention, it is suitable that the rubber-like elastomer layer ($\alpha$) is constituted from a polymer obtained by polymerizing 100 parts by weight of a monomer mixture composed of 40 to 90% by weight of an alkyl acrylate having an alkyl group of 8 or less carbon atoms and 10 to 60% by weight of a monofunctional monomer having one vinyl group which can be copolymerized with the alkyl acrylate, 0.1 to 10 parts by weight of a graft-linking agent, and 0.1 to 10 parts by weight of a multifunctional cross-linking agent having at least two vinyl groups; and the rigid polymer layer ($\beta$) is constituted from a polymer obtained by polymerizing a monomer or monomer mixture composed of 60 to 100% by weight of an alkyl methacrylate having an alkyl group of 4 or less carbon atoms and 0 to 40% by weight of an unsaturated monomer which can be copolymerized with the alkyl methacrylate.

The further object of the present invention can be accomplished by a method for producing the impact resistant acrylic polymer pellet of the above-described, comprising:

a step of feeding a water-containing polymer (X) or a mixture of a water-containing polymer (X) with at least one organic stabilizer (Y) to a compression dehydration extruder,
wherein said water-containing polymer (X) is a polymer obtained by coagulating the emulsified latex of an acrylic multi-layer polymer containing a rubber-like elastomer, and is able to provide an acrylic multi-layer polymer which contains 40% by weight or less of fine powders having particle size of 212 μm or less after drying and shows a volume of voids having pore size of 5 μm or less being 0.7 ml or less per one gram of dried polymer measured by a mercury pressure method after drying,
said organic stabilizer (Y) is selected from the group consisting of a phosphorus-based compound, a hindered phenol-based compound and a hindered amine-based compound, and
said compression dehydration extruder comprises a dehydration part having at least one dehydration slit, a compression part for removing liquid substances from the water-containing polymer (X) and a deaeration part for discharging vaporized substances; and,
steps of dehydrating, drying, melting and extruding the water-containing polymer(X) or the mixture to form the pellet.

## BRIEF DESCRIPTION OF DRAWINGS

Fig. 1 is a schematic constitution view of the twin screw compression dehydration extruder used in the present invention.
Fig. 2 is a constitution view of the screw used in the twin screw compression dehydration extruder in Fig. 1.

## BEST MODE FOR CARRYING OUT THE INVENTION

The impact resistant acrylic polymer in the present invention is in the form of pellet, and contains a lot of fine acrylic multi-layer polymers (hereinafter, appropriately referred to as "multi-layer polymer"). This multi-layer polymer has at least one rubber-like elastomer layer (α) as an inner layer and a rigid polymer layer (β) as an outermost layer.

The proportion of parts insoluble in acetone of the multi-layer polymer is from 70 to 97% by weight per unit weight of the pellet. The proportion of the rubber-like elastomer contained in this multi-layer polymer is preferably from 50 to 90% by weight, more preferably from 55 to 80% by weight, and particularly preferably from 60 to 75% by weight. Here, the proportion of the rubber-like elastomer means the ratio of the total weight of the polymer of the rubber-like elastomer layer (α) and all polymer layers inner than this rubber-like elastomer layer (α) to the gross weight of the multi-layer polymer. This value is calculated from charging ratio by weight of a monomer mixture of each polymer layer.

When the proportion of the rubber-like elastomer is too small, the effect of improving impact resistance can not be easily manifested. On the other hand, when the proportion of the rubber-like elastomer is too large, compatibility between the multi-layer polymer and matrix resin may be degraded because the amount of the outermost layer is too small.

The multi-layer polymer useful in the present invention preferably has at least one rubber-like elastomer layer (α) as an inner layer constituted of a polymer which shows a glass transition temperature (Hereinafter, abbreviated as Tg) of 25°C or less in the case of homopolymerization and a rigid polymer layer (β) as an outermost layer constituted of a polymer which shows a Tg of 50°C or more in the case of homopolymerization. If the inner layer has at least one rubber-like elastomer layer (α), it is sufficient to be used. A multi-layer polymer having one or more intermediate layers and the innermost layer can be used. Examples of polymers having specific structure include a two-layer polymer having a rubber-like elastomer layer (α) as an inner layer and as a rigid polymer layer (β) an outer layer, a three-layer polymer having a rigid polymer layer as the innermost layer, a rubber-like elastomer layer (α) as an intermediate layer and a rigid polymer layer (β) as the outermost layer, a four-layer polymer having a rubber-like elastomer layer (α) as the innermost layer, a rigid polymer layer as a second layer, a rubber-like elastomer layer (α) as a third layer and a rigid polymer layer (β) as the outermost layer, and the like. These multi-layer polymers can adopt salami structure in which a plurality of rigid polymers are dispersed in a rubber-like elastomer layer (α), and salami structure in which a plurality of rubber-like elastomers are dispersed in rigid polymer layer as an inner layer.

The rubber-like elastomer layer (α) constituting an inner layer or an intermediate layer is preferably a polymer obtained by polymerizing 100 parts by weight of a monomer mixture composed of 40 to 90% by weight of an alkyl acrylate having an alkyl group of 8 or less carbon atoms and 10 to 60% by weight of a monofunctional monomer having one vinyl group which can be copolymerized with the alkyl acrylate, 0.1 to 10 parts by weight of a graft-linking agent, and 0.1 to 10 parts by weight of a multifunctional cross-linking agent having at least two vinyl groups. The proportion of this alkyl acrylate to the monofunctional monomer is determined by refractive index in the case that transparency of a resin is required. When the amount of the alkyl acrylate is small, impact resistance tends to lower. When Tg of a polymer constituting this rubber-like elastomer (α) is lower, the impact resistance of the resulted resin composition can be improved more efficiently at low temperature. Therefore, Tg in the case of homopolymerization is preferably 25°C or less, more preferably 10°C or less.

As the alkyl acrylate having an alkyl group of 8 or less carbon atoms, methyl acrylate, ethyl acrylate, propyl acrylate, n-butyl acrylate, 2-ethylhexyl acrylate and the like are listed, and particularly, n-butyl acrylate is preferable. These can be used alone, and also in combination. As the monofunctional monomer which can be copolymerized, aromatic unsaturated monomers such as styrene, vinyltoluene and $\alpha$-methylstyrene; and methacrylic monomers such as phenyl methacrylate and naphthyl methacrylate are listed. In particular, styrene is preferable as a monomer for controlling refractive index.

The graft-linking agent is a compound having a plurality of functional groups in which the reactivity of at least one functional group differs from that of other functional group, and examples thereof include allyl esters of acrylic acid, methacrylic acid, maleic acid, fumaric acid, or the like. Among them, allyl acrylate and allyl methacrylate are preferred. The multifunctional cross-linking agent is a compound having in the molecule a plurality of functional groups having the same reactivity, and examples thereof include 1,3-butylene dimethacrylate and 1,4-butanediol diacrylate.

On the other hand, the rigid polymer layer ($\beta$) constituting the outermost layer is preferably constituted of a polymer having a Tg of 50°C or more in the case of homopolymerization, and a compound composed of 60 to 100% by weight of alkyl methacrylates having an alkyl group of 4 or less carbon atoms and 0 to 40% by weight of other unsaturated monomer which can be copolymerized with them is preferred. As the example of the alkyl methacrylates having an alkyl group of 4 or less carbon atoms, methyl methacrylate, ethyl methacrylate and n-butyl methacrylate are listed, and particularly, methyl methacrylate is preferable. As the example of the unsaturated monomer which can be copolymerized with them, the alkyl acrylates and other monofunctional monomers as exemplified as the monomer for the rubber-like elastomer, and 1,3-butadiene, 2,3-butadiene, vinyltoluene, cyclohexyl methacrylate, benzyl methacrylate, acrylonitrile, methacrylonitrile and the like are listed, and these can be used alone, and also in combination.

The rigid polymer layer ($\beta$) has action that it is graft-connected with an inner layer part to improve compatibility between the rubber-like elastomer layer ($\alpha$) and the matrix resin. Therefore, the proportion of the rigid polymer layer ($\beta$) in the multi-layer polymer is preferably from 10 to 50% by weight. When the proportion of the rigid polymer layer ($\beta$) is too small, the compatibility between the multi-layer polymer and the matrix resin deteriorates, and further, coating of the rubber-like elastomer becomes incomplete, therefore, the adhesion of the multi-layer polymer with each other may increase and handling thereof may deteriorate. On the other hand, when the proportion of the rigid polymer layer ($\beta$) is too large, the proportion of the rubber-like elastomer decreases, and the effect of improving impact resistance is not easily manifested.

As the more preferable example of the multi-layer polymer, there is listed a multi-layer polymer having three-layer structure composed of the innermost layer polymer ($\gamma$1) obtained by polymerizing a monomer mixture composed of 100 parts by weight of a monomer mixture composed of 5 to 70% by weight of at least one monomer selected from styrene and alkyl acrylates having an alkyl group of 8 or less carbon atoms and 30 to 95 parts by weight of methyl methacrylate, 0.1 to 5 parts by weight of a graft-linking agent, and 1 to 5 parts by weight of a multifunctional cross-linking agent, a rubber-like elastomer layer ($\alpha$1) obtained by polymerizing a monomer mixture composed of 100 parts by weight of a monomer mixture composed of 70 to 90% by weight of alkyl acrylates having an alkyl group of 8 or less carbon atoms and 10 to 30 parts by weight of an aromatic vinyl monomer, 1 to 3 parts by weight of a graft-linking agent, and 0.1 to 1 part by weight of a multifunctional cross-linking agent, and a rigid polymer layer ($\beta$1) obtained by polymerizing a monomer mixture composed of 85 to 97% by weight of methyl methacrylate and 3 to 15% by weight of alkyl acrylates having an alkyl group of 4 or less carbon atoms.

The proportions of layers constituting the multi-layer polymer are preferably 20 to 35% by weight for the innermost layer polymer ($\gamma$1), 30 to 70% by weight for the rubber-like elastomer layer ($\alpha$1) and 10 to 50% by weight for the rigid polymer layer ($\beta$1), respectively.

As the alkyl acrylates having an alkyl group of 8 or less carbon atoms and alkyl acrylates having an alkyl group of 4 or less carbon atoms, for example, the compounds described above are listed. As the graft-linking agent and multifunctional cross-linking agent, for example, the compounds described above are listed.

The multi-layer polymer in the present invention is produced by emulsion polymerization, and the emulsion polymerization is carried out with any monomer composition within the range in which the above-described polymer can be formed.

The method for polymerization is not particularly restricted. Examples of a radical polymerization initiator include peroxides such as benzoyl peroxide, cumenehydro peroxide and hydrogen peroxide; azo compounds such as azobisisobutyronitrile; persulfate compounds such as ammonium persulfate and potassium persulfate; perchlorate compounds; perborate compounds; and redox-based initiators composed of combination of peroxides with reducing sulfoxide compounds.

The above-described monomers and polymerization initiators are added by a known method such as a batchwise addition method, divided addition method, continuous addition method, monomer addition method and emulsion addition method. Further, atmosphere of the reactor can be substituted by nitrogen for smooth progress of the reaction, the reactor can be heated after completion of the reaction for removing remaining monomers, and a special catalyst can be added.

Suitable polymerization temperatures for manufacturing polymers of respective layers are from 30 to 120°C, more preferably from 50 to 100°C for all layers. The ratio by weight of monomer/water is not particularly restricted and preferably from about 1/1 to 1/5, more preferably from 1/1.5 to 1/3 in usual. In addition, additives usually used in polymerization such as a chain transfer agent, ultraviolet ray absorber can be added.

The emulsifying agent used in the present invention is not particularly restricted, and salts of phosphates or mixture thereof are preferable. Examples thereof include alkaline metal salts or alkaline earth metal salts such as monon-butylphenylpentaoxyethylene phosphate, di-n-butylphenylpentaoxyethylene phosphate, mono-n-pentylphenylhexaoxyethylene phosphate, di-n-pentylphenylhexaoxyethylene phosphate, mono-n-heptylphenylpentaoxyethylene phosphate, di-n-heptylphenylpentaoxyethylene phosphate, mono-n-pentyloxyheptaoxyethylene phosphate, di-n-pentyloxyheptaoxyethylene phosphate, mono-n-hexyloxypentaoxyethylene phosphate and di-n-hexyloxypentaoxyethylene phosphate. As above alkaline metal, sodium or potassium is preferred, and as above alkaline earth metal, calcium or barium is preferred. These salts of phosphates can be used alone, or as a combination of a monoester and a diester of them.

The amount used of the above-described salt of phosphate is not particularly restricted since it has close relation with the kind of a monomer to be polymerized, polymerization conditions and the like. In the present invention, this amount is preferably from 0.1 to 10 parts by weight, more preferably from 0.5 to 5 parts by weight based on 100 parts by weight of the monomer.

The coagulation method in recovering a multi-layer polymer from an emulsified latex in the present invention is not particularly restricted, and for enhancing drying efficiency in compressing, dehydrating described, a method is preferred in which the water content of a coagulated powder is small and the amount of fine powders is small.

Specifically, a method is preferred in which a latex is poured at a linear velocity of 0.5 m/s or less into a 1.8 to 5% aqueous calcium acetate solution (coagulating agent solution) at a temperature of 90°C or more, and coagulated.

The temperature of a coagulation solution for obtaining the intended coagulated powder of a multi-layer polymer, in which the water content is small and the proportion of fine powders is small, is not particularly restricted since it is influenced by the kind and amount of a monomer used as a raw material, and also by coagulation conditions such as shear force due to stirring, and preferably it is in the range from 90°C to 100°C. When the coagulation solution temperature is too low, the water content of the coagulated powder may increase and the amount of fine particles may increase.

The kind of the coagulating agent also is not particularly restricted, and for decreasing water content, a calcium compound having relatively high coagulating force is preferred, and an aqueous calcium acetate solution is more preferably used. The concentration of the aqueous solution of calcium acetate is preferably from 0.1 to 20% by weight, more preferably from 1.8 to 5% by weight. When the concentration of the aqueous solution of calcium acetate is too low, a multi-layer polymer may not recovered in a stable manner, and when the concentration of the aqueous solution of calcium acetate is too high, the aqueous calcium acetate solution may be saturated for precipitating calcium acetate. As the coagulating agent, other acids, bases and the like can also be used together according to demands, however, combination with inorganic salts such as sulfates and carbonates is not preferable since an insoluble calcium salt is formed.

The speed for pouring a latex into a coagulating agent solution also is not particularly restricted since it is influenced by other coagulation conditions, and a method is preferred in which a latex is poured as slowly as possible at a linear speed of 0.5 m/s or less into a coagulating agent solution and coagulated. When the linear speed is too fast, the water content of a coagulated powder may be undesirably relatively large.

The coagulated powder (wet polymer) obtained by coagulating an emulsified latex is washed sufficiently with water in an amount of about 5 to 100 times by weight per weight of the polymer. When the amount of water used for water washing is too small, the amount of remaining coagulating agent is large, and the appearance and physical properties of the pellet may deteriorate. The coagulated powder is washed with water, then, dehydrated by a centrifugal dehydration machine and the like, and supplied as a water-containing polymer (X) to a compression dehydration extruder.

The water-containing polymer (X) obtained by coagulation, washing with water and dehydration of an emulsified latex of a multi-layer polymer in the present invention is dried by using a compression dehydration extruder. In this procedure, an organic stabilizer (Y) such as a phosphorus-based compound, hindered phenol-based compound and hindered amine-based compound, can be added together depending on occasion.

In drying process, when the water content of a coagulated powder is lower, the drying speed is higher and the process is more efficient, in general. This troublesome water exists in a fine void having a pore size of several μm or less formed in the multi-layer polymer. Therefore, a coagulated powder, in which the volume of voids having a pore size of 5 μm or less measured by a mercury pressure method after drying of the coagulated powder is 0.7 ml or less per one gram of dried polymer, has small water content, and is excellent in drying efficiency. When the volume of voids is high, the drying speed is low since the water content of the coagulated powder is relatively large.

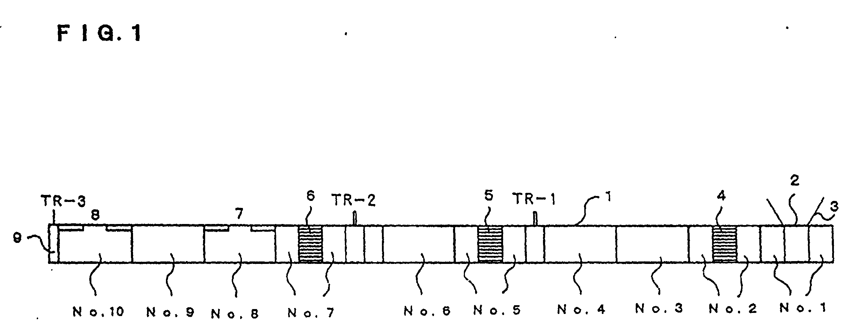

For efficiently drying a coagulated powder using a pressure dehydration extruder, large average particle size and smaller fine powder proportion of the coagulated powder are further effective. Specifically, it is preferable that a coagulated powder has the above-described void structure and the proportion of fine particles having a particle size of 212 µm or less in the coagulated powder is 40% by weight or less. When the proportion of fine powders is smaller, it is more preferable. When the proportion of fine powders in a coagulated powder is large, a lot of water dehydrated at a compression part remains and surging phenomenon tends to occur if the feed amount of the coagulated powder is increased. Therefore, the supply of the coagulated powder to a compression dehydration extruder is restricted, and upper limit of polymer to be supplied to compression dehydration extruder becomes small. The upper limit of polymer to be supplied to compression dehydration extruder means an amount (dry base) of a polymer treated when the supply of a water-containing polymer (X) is gradually increased with maintaining a screw rotational speed constant of compression dehydration extruder, and then discharge of water from a dehydration slit (4 in Fig. 1) stops.

The compression dehydration extruder used in the present invention is constituted of a raw material introducing part, a dehydration part having at least one dehydration slit, a compression part for removing liquid substances from a water-containing polymer (X) and a deaeration part for discharging vaporized substances. Most part of liquids is dehydrated in the above-described dehydration part, and further, a polymer is heated and melted, and extruded through a dice at the leading point of the extruder, and the extruded strand is cut immediately by a hot cutter or cooled in a cooling vessel before cutting by a cutter, to obtain a pellet.

The compression dehydration extruder is a kind of screw extruder basically comprising a screw, cylinder, dice and screw driving part as main constituent components. As most characteristic feature, it is equipped with a dehydration slit for discharging liquid separated from a water-containing polymer in a compression part, at upstream side of the extruder, and equipped with a heating part (deaeration part) which can heat a polymer from which a most part of liquids has been dehydrated at temperature range from normal temperature to 400°C, at downstream side of the extruder.

The compression dehydration extruder is not particularly restricted providing it has the above-described structure, and used of a twin screw compression dehydration extruder such as TEM-35B manufactured by Toshiba Machine Co., Ltd. is preferable.

In this twin screw compression dehydration extruder, ten barrel blocks No. 1 to No. 10 are provided in a barrel 1, and two screws having the same configuration are inserted inside the barrel with the two screws engaging each other and with axes thereof being parallel each other, as shown in Fig. 1.

Regarding the constitution of the barrel, the barrel blocks No. 1, No. 3, No. 4, No. 6, No. 8, No. 9 and No. 10 have the same structure used in a usual twin screw extruder, and do not have special structure. On side faces of barrel blocks No. 2, No. 5 and No. 7, dehydration slits 4, 5 and 6 having slit clearance so as to pass only liquid are formed respectively, as shown in Fig. 1. At a raw material introducing port 2 on the upper surface of the barrel block No. 1, a hopper 3 is provided and, above this hopper, a raw material introducing apparatus which is not shown is placed. Further, the leading point of the twin screw compression dehydration extruder is equipped with a dice 9. Marks 7 and 8 represent a first deaeration port and a second deaeration port respectively, and TR-1, TR-2 and TR-3 represent thermocouples for measuring resin temperature.

The screw to be inserted into the barrel having above-described constitution is constituted by appropriately combining screw blocks and kneading disks having various screw constitutions and lengths.

In this example, various screw blocks and kneading disks are combined, and two screws having the same structure and an overall length of 1244 mm are used.

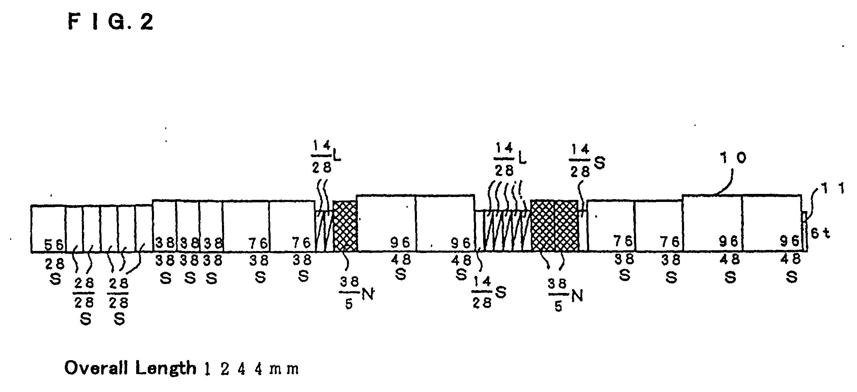

Fig. 2 shows the screw used in the present invention. Screw S block length/lead length (number) or kneading disk N block length/number of the disk (number) are constituted as shown in Fig. 2. In the drawing, S represents a screw block having clockwise winding direction, L represents a reverse screw block having anti-clock wise winding direction, and N represents a kneading disk block having clockwise winding direction. The mark 11 represents a collar for controlling length.

One pair of screws 10 engaging with each other constituted as described above are inserted into the above-described barrel 1, and the end thereof is connected to a driving source having speed changing ability.

Therefore, in the thus obtained twin screw compression dehydration extruder of this example, the barrel block No. 1 part constitutes a raw material introducing part, the barrel block No. 2 part constitutes a first dehydrating part, the barrel block No. 5 part constitutes a second dehydrating part, and the barrel block No. 7 part constitutes a third dehydrating part. The barrel blocks No. 4 to No. 5 and the former part of the barrel blocks, the rear part of the barrel block No. 6 and the former part of the barrel block No. 7 constitute a compression part composed of the kneading disk and the reverse screw block.

To this twin screw compression dehydration extruder, a water-containing polymer (X) obtained by centrifugal dehydration after coagulation is supplied via the raw material feed port 2, and mixed, dehydrated, dried, melted and extruded through the outlet of the dice as a melted strand, and cut by a cutter and the like after cooled in a cooling vessel, to obtain a polymer in the form of a pellet. If occasion demands, it is also possible that the water-containing polymer (X) is supplied through the raw material feed port 2 together with an organic stabilizer (Y) and a polymer in the form of a pellet is obtained in the same manner as described above.

As the organic stabilizer (Y) used in the present invention, a phosphorus-based compound, hindered phenol-based compound and hindered amine-based compound are listed, and these can be used alone or combination of two or more. By the addition of these organic stabilizers (Y), improvement in transparency of a molded plate and the like is manifested in the case of a phosphorus-based compound, improvement in thermal decomposition resistance in molding and the like is manifested in the case of a hindered phenol-based compound, and improvement in weather resistance in a molded plate and the like is manifested in the case of a hindered amine-based compound. However, when a phosphorus-based compound is used, thermal decomposition resistance in molding and the like tends to slightly lower, and when a compound which is liable to be hydrolyzed is used, the appearance of a molded plate and the like may be degraded.

As the organic stabilizers (Y), public-known compounds can be used. For example, as a phosphorus-based compound, ADECASTUB 2112 manufactured by Asahi Denka Kogyo K. K. is listed, as a hindered phenol-based compound, ADECASTUB AO-50 and ADECASTUB AO-60 manufactured by Asahi Denka Kogyo K. K. are listed, and as a hindered amine-based compound, ADECASTUB LA-57, ADECASTUB LA-77 and the like manufactured by Asahi Denka Kogyo K. K. are listed

The amount used of the organic stabilizer (Y), when it is used alone, is preferably from 0.01 to 5 parts by weight in the case of a phosphorus-based compound, from 0.01 to 3 parts by weight in the case of a hindered phenol-based compound and from 0.01 to 3 parts by weight in the case of a hindered amine-based compound, based on 100 parts by weight of a polymer (in terms of a dried substance obtained by removing water from a water-containing polymer). In any case, when the amount added of the organic stabilizer (Y) is too samall, the effect may not be manifested, on the other hand, when the amount added is too large, undesirable bleeding may occur in a molded plate and the like. When two or more stabilizers are used in combination, the amount added is preferably from 0.03 to 5 parts by weight based on 100 parts by weight of the polymer.

The heating temperature at a compression dehydration extruder in making a pellet is preferably controlled in the range from 200 to 300°C as the maximum resin temperature. When the resin temperature is too high, the resin and, the organic stabilizer depending on occasion are degraded, and lowering in quality tends to occur, and when the resin temperature is too low, resin is not easily melted completely. Further, the deaeration pressure is preferably not more than normal pressure.

Further, the amount of water discharged in a first dehydration part of a compression dehydration extruder in making a pellet is preferably 55% or more, more preferably 60% or more based on the amount of water contained in a water-containing polymer. When this amount discharged in the first dehydration part is small, a large amount of water is fed to the deaeration part at the leading point and the thus obtained pellet contain water and is foamed. Therefore, the screw in the first compression part existing on raw material feeding side shown in Fig. 2 is constituted so that the discharge of water from the water-containing polymer (X) is easily evacuated by increasing the number of L screws and kneading disk blocks as compared with conventional constitution to enhance the compression effect.

In the impact resistant acrylic polymer pellet obtained in the present invention, it is preferable that the amount of alkaline earth metals derived from a coagulating agent (for example, calcium acetate) used in coagulating the emulsified latex of the multi-layer polymer is 700 ppm or less. When the amount of this remaining coagulating agent is too large, the appearance and physical properties of a molded plate and the like may deteriorate. In compression dehydration extruder, the remaining amount tends to be small relatively since the remaining coagulating agent dissolved in water is discharged in the first dehydration part together with water. However, the amount of the remaining coagulating agent is strongly influenced by the amount of washing water for slurry as described above.

If required, a methacrylic resin and other stabilizer, plasticizer, dye and the like are added to thus obtained impact resistant acrylic polymer in the form of a pellet, and they are mixed by a Henschel mixer and the like, then, the mixture can be molded by a known method such as injection molding and extrusion molding. Further, if occasion demands, after mixing by a Henschel mixer and the like, the mixture can be made into a pellet again in this stage by a known method such as that in which the mixture is melted and kneaded using an extruder at a temperature from 200 to 300°C and the resulted pellet can be molded by a known method such as injection molding and extrusion molding. The methacrylic resin herein used is not particularly restricted, and there are listed methacrylic resins comprising 80 to 100% by weight of methyl methacrylate, 0 to 20% by weight of an alkyl acrylate having an alkyl group of 8 or less carbon atoms, and 0 to 20% by weight of a vinyl-based monomer which can be copolymerized with them. As the examples of the alkyl acrylate having an alkyl group of 8 or less carbon atoms and the vinyl-based monomer which can be copolymerized, above-described compounds are used.

The compounding ratio of an impact resistant acrylic polymer in the form of a pellet and a methacrylic resin is not particularly restricted, and all of which may be composed of an impact resistant acrylic polymer depending on physical properties required. Since flowability in melting deteriorates and molding processability lowers when the proportion of a rubber-like elastomer is too large, the proportion of a rubber-like elastomer in a resin composition compounded is preferably 50% by weight or less.

The following examples illustrate the present invention. In the examples, "part" represents "part by weight", and "%" other than total transparency and cloudiness value represents "% by weight", respectively.

The form of a flat plate used for evaluation in the examples, and various evaluations follow the conditions described below.

1. Molding condition

Injection molding machine: manufactured by The Japan Steel Works, Ltd., V-17-65 screw type automatic injection molding machine
Injection molding condition: cylinder temperature 250°C, injection pressure 700 kg/cm$^2$
Specimen size:

specimen ① 110 mm × 110 mm × 2 mm (thick),
specimen ② 70 mm × 12.5 mm × 6.2 mm (thick)

2. Evaluation method

(1) Water content (%)

About 5 g of a water-containing polymer was weighed precisely (Ww), then, dried with hot air at 180°C for 1 hour, the dried weight (WD) was measured, and calculated according to the following formula.

$$\texttt{Water content (\%) = [(WW-WD)/WD]} \times \texttt{100}$$

(2) Measurement of average particle size of coagulate powder

Sieves were piled up in the order of size of the opening of the sieves having opening sizes 63 μm, 106 μm, 212 μm, 300 μm, 500 μm, 850 μm, 1400 μm and 2000 μm so that larger was upper, and a receiving plate was placed on the lowest step. A wet polymer was dried at 75°C for 24 hours to obtain 10 g of a dried powder, and this powder was charged in the most upper step of the piled sieves, and sieving was conducted for 30 minutes by an electrodynamic vibrator. Then, the weight of a powder on a sieve of each step was measured, and the weight passed through the opening of a sieve was integrated, and an average value of particle size was calculated against the sample weight.

(3) Measurement of proportion of fine particles (212 μm or less) in coagulated powder

According to the same procedure as in (2) above, the proportion against the sample weight was calculated from the weight of powders passed through the sieve of 212 μm.

(4) Measurement of pore size and volume

A wet polymer was dried at 75°C for 24 hours to obtain a dried powder as a sample. About 0.12 g of this sample was weighed precisely, then, charged into a glass capillary, deaerated for 30 minutes to make vacuum condition, then, the capillary was filled with mercury, and pore diameter and volume were measured by using a porosimeter (manufactured by AMCO, MODEL 2000 type)

(5) Dehydration ratio of first dehydration part in compressing, dehydrating and extruding

The amount of liquid discharged through a dehydration slit (4 in Fig. 1) (Wa) was measured and the amount of water contained in a water-containing polymer (X) supplied per 1 hour (Wb) was measured, and the dehydration ratio was calculated from them according to the following formula.

$$\text{Dehydration ratio (\%)} = (Wa/Wb) \times 100$$

(6) Upper limit of polymer to be supplied to compression dehydration extruder

The feeding amount of a water-containing polymer (X) was gradually increased while maintaining a screw rotational speed constant of compression dehydration extruder, and polymer treating amount (dry base) when discharging of water through a dehydration slit (4 in Fig. 1) stopped was recognized as upper limit of polymer to be supplied to compression dehydration extruder.

(7) Appearance of molded article

The appearance of a specimen ① was evaluated according to the following criterion.

◎ Extremely excellent
○ Excellent
△ slightly poor
X poor

(8) Total transparency

The total transparency was measured using a specimen ① according to ASTM D-1003.

(9) Cloudiness value (Haze)

The cloudiness value was measured using a specimen ① according to ASTM D-1003.

(10) Yellow index

The yellow index was measured using a specimen ① according to ASTM D-1925.

(11) Izod impact strength

The Izod impact strength (notched) was measured using a specimen ② according to ASTM D-256.

(12) Thermal decomposition resistance

The amount of a remaining methyl methacrylate monomer in specimen ① was measured by using GC-8A, gas chromatography manufactured by Shimadzu Corp., and the thermal decomposition resistance was evaluated by the remaining amount of the monomer according to the following criterion.

○ less than 0.2%
△ 0.2 to 0.4%
X 0.4% or more

(13) Weather resistance

A specimen ① was exposed outdoors for 30 days, the appearance of the specimen at that time was visually evaluated according to the following criterion.

○ Excellent (slight coloring)
△ slightly poor (coloring)
X poor (remarkable coloring)

(14) Content of acetone-insoluble part in pellet

About 1 g of an impact resistant acrylic polymer was weighed precisely (W1), to this was added 50 ml of acetone and the mixture was allowed to stand still for one night, then shaken at 65°C for 6 hours, subjected to centrifugal separation at 4°C, 14000 rpm for 30 minutes, then, the supernatant was removed, to this was added 50 ml of acetone and the mixture was vibrated for 30 minutes by a supersonic vibrator, subjected to centrifugal separation at 4°C, 14000 rpm for 30 minutes, and again, this operation was repeated, then, the supernatant was removed and the remainder was dried by air for one night, and further dried in vacuum at 80°C for 5 hours, then, cooled in a desiccator, and the weight of the remainder was weighed precisely (W2).

The content of acetone-insoluble part was calculated according to the following formula.

$$\text{Acetone-insoluble part (\%)} = (W2/W1) \times 100$$

(15) Remaining alkaline earth metal amount

About 2 g of an impact resistant acrylic polymer pellet was precisely weighed, then, taken out into a platinum plate, and converted into ash completely by an electric heater. Then, distilled water and hydrochloric acid were added, and the mixture was transferred into a 100 ml measuring flask in constant volume as a sample solution. This was measured by atomic absorption method. (In the present examples, the amount of Ca was measured since calcium acetate was used as a coagulating agent.)

3. Compression dehydration extruder

Experiment was conducted by using a compression dehydration extruder constituted of the barrel shown in Fig. 1 and the screw shown in Fig. 2.

Compression dehydration extruder: manufactured by Toshiba Machine Co., Ltd., TEM-35B, twin screw type
Barrel caliber: 35 mm
Screw length: 1244 mm
Screw rotational speed: 50 to 400 rpm
Screw constitution: that shown in Fig. 2
Dehydration slit clearance: 0.2 mm
Barrel block temperature: No. 1, No. 2, No. 5, No. 7 Normal temperature
Deaeration pressure: first deaeration port, second deaeration port Normal pressure

[Example 1]

Three hundred parts of deionized water was charged into a stainless steel reaction vessel, then, heated and when the inner temperature reached 80°C, a mixture (a) having the following composition was introduced.

Mixture (a):

| Deionized water | 5.0 parts |
| --- | --- |
| Formaldehyde sodium sulfoxilate dihydrate (hereinafter, referred to as Rongalite) | 0.48 part |
| Ferrous sulfate | $0.4 \times 10^{-6}$ part |
| Disodium ethylenediamine tetraacetate | $1.2 \times 10^{-6}$ part |

After kept for 15 minutes, a mixture (b) having the following composition which atmosphere had been substituted by nitrogen was added dropwise over a period of 2 hours, and the mixture was polymerized for 1 hour with maintaining the temperature at 80°C. The polymerization ratio of the resulted latex was 99% or more.

Mixture (b):

| Methyl methacrylate | 21.6 parts (54.0%) |
| --- | --- |

(continued)

| | |
|---|---|
| Styrene | 2.0 parts (5.0%) |
| n-Butyl acrylate | 16.4 parts (41.0%) |
| 1,3-Butylene dimethacrylate | 1.1 parts |
| Diallyl maleate | 0.14 part |
| t-Butyl hydroperoxide | 0.08 part |
| 1:1 Mixture of sodium mono-n-pentylphenyhexaoxyethylene phosphate with sodium di-n-pentyl-phenylhexaoxyethylene phosphate (hereinafter, referred to as emulsifier Z) | 1.20 parts |

Subsequently, a mixture (c) having the following composition was introduced into the above-described reaction vessel and kept for 15 minutes, then, a mixture (d) having the following composition which atmosphere had been substituted by nitrogen was added dropwise over a period of 3 hours, and the mixture was further polymerized for 3 hours to obtain an acrylic rubber-like elastomer latex having multi-layer structure. The polymerization ratio of the resulted latex was 99% or more, and the particle size was 0.25 µm.

Mixture (c):

| | |
|---|---|
| Rongalite | 0.2 part |
| Deionized water | 5.0 parts |

Mixture (d):

| | |
|---|---|
| Styrene | 10.0 parts (16.7%) |
| n-Butyl acryalte | 50.0 parts (83.3%) |
| 1,3-Butylene dimethacrylate | 0.2 part |
| Diallyl maleate | 1.0 part |
| Cumene hydroperoxide | 0.17 part |
| Emulsifier Z | 1.8 parts |

Then, a mixture (e) having the following composition was introduced into the above-described reaction vessel and kept for 30 minutes, then, a mixture (f) having the following composition which atmosphere had been substituted by nitrogen was added dropwise over a period of 2 hours, and the mixture was further polymerized for 1 hour to obtain an acrylic multi-layer polymer latex (L-1). The polymerization ratio of the resulted latex (L-1) was 99% or more, and the particle size was 0.27 µm.

Mixture (e):

| | |
|---|---|
| Rongalite | 0.2 part |

(continued)

| Deionized water | 5.0 parts |
|---|---|

Mixture (f):

| Methyl methacrylate | 57.0 parts (95%) |
|---|---|
| Methyl acryalte | 3.0 parts (5%) |
| t-Butyl hydroperoxide | 0.1 part |
| n-octylmercaptan | 0.39 part |

A 1.8% aqueous calcium acetate solution was charged as a recovering agent into a stainless vessel, heated up to 90 °C with mixing and stirring, to this solution was added the latex (L-1) produced previously continuously at a linear speed of 0.4 to 0.5 m/s, then, the mixture was kept for 30 minutes. After cooled to room temperature, the coagulated polymer was filtered by a centrifugal dehydration machine while washing with distilled water in amount of 7-times by weight per weight of the polymer, to obtain a white acrylic multi-layer polymer (A-1) having a water content of 45%. The properties and conditions of the coagulated powder of the acrylic multi-layer polymer (A-1) are shown in Table 1.

Then, the acrylic multi-layer polymer (A-1) was supplied to a compression dehydration extruder under conditions described below, to obtain an impact resistant acrylic polymer (rubber-like elastomer content 62.5%, acetone-insoluble content 75%) in the form of a pellet. This pellet had excellent configuration which had been completely melted and contained no bubble.

Compression dehydration extrusion conditions:

Cylinder temperature: C1 = 120°C (barrel block No. 3), C2 = 140°C (barrel block No. 4), C3 = 170°C (barrel block No. 6), C4 = 250°C (barrel block No. 8), C5 = 250°C (barrel blocks No. 9, No. 10)
Dice temperature: 250°C
Screw rotational speed: 300 rpm
Raw material feed rate: 12.0 kg/hr (dry base)
Resin temperature: TR-1 = 150°C, TR-2 = 180°C, TR-3 = 255°C
Dehydration ratio at first dehydration part: 65%
Upper limit of polymer to be supplied to compression dehydration extruder (300 rpm): 14.3 kg/he (dry base)

Then, a mixture of 1600 parts of the pellet and 2400 parts of a methacrylic resin [manufactured by Mitsubishi Rayon Co., Ltd., ACRYPET (registered trade mark) VH] was fed to a screw type extruder having an outer diameter of 40 mmØ [manufactured by Japan Steel Works Ltd., P-40-26AB-V type, L/D = 26], and melted and kneaded to be pelletized at a cylinder temperature of 200 to 260°C and a dice temperature of 250°C to obtain an impact resistant acrylic resin having a content of a rubber-like elastomer of 25%, and this resin was injection molded. The evaluation results are shown in Table 2.

[Example 2]

The same procedure as in Example 1 was conducted except that the amount of n-octylmercaptan in the mixture (f) was changed to 0.18 parts, to obtain an acrylic multi-layer polymer latex (L-2) and a white acrylic multi-layer polymer (A-2) having a water content of 53%. The properties and conditions of the coagulated powder of the acrylic multi-layer polymer (A-2) are shown in Table 1.

Then, the acrylic multi-layer polymer (A-2) was fed to a compression dehydration extruder under conditions described below, to obtain an impact resistant acrylic polymer (rubber-like elastomer content 62.5%, acetone-insoluble content 89%) in the form of a pellet. This pellet had excellent configuration which had been completely melted and contained no bubble.

Compression dehydration extrusion conditions:

Cylinder temperature, dice temperature and screw rotational speed are the same as in Example 1.

Raw material feed rate: 12.5 kg/hr (dry base)
Resin temperature: TR-1 = 147°C, TR-2 = 185°C, TR-3 = 257°C
Dehydration ratio at first dehydration part: 62%
Upper limit of polymer to be supplied to compression dehydration extruder (300 rpm): 14.0 kg/he (dry base)

Then, a mixture of 1600 parts of this pellet and 2400 parts of a methacrylic resin (ACRYPET VH) was melted and kneaded to be pelletized under the same conditions as in Example 1 to obtain an impact resistant acrylic resin having a content of a rubber-like elastomer of 25%, and this resin was injection molded. The evaluation results are shown in Table 2.

[Example 3]

The same procedure as in Example 1 was conducted except that the amount of methyl methacrylate was changed to 20.0 parts (50.0%), the amount of styrene was changed to 0.0 part (0.0%), and 20.0 parts (50.0%) of methyl acrylate was used instead of n-butyl acrylate in the mixture (b), and the amount of n-octylmercaptan was changed to 0.0 part in the mixture (f), to obtain a white acrylic multi-layer polymer (A-3) having a water content of 60%. The properties and conditions of the coagulated powder of the acrylic multi-layer polymer (A-3) are shown in Table 1.
Then, the acrylic multi-layer polymer (A-3) was fed to a compression dehydration extruder under conditions described below, to obtain an impact resistant acrylic polymer (rubber-like elastomer content 62.5%, acetone-insoluble content 96%) in the form of a pellet. This pellet had excellent configuration which had been completely melted and contained no bubble.

Compression dehydration extrusion conditions:

Cylinder temperature, dice temperature and screw rotational speed are the same as in Example 1.

Raw material feed rate: 11.5 kg/hr (dry base)
Resin temperature: TR-1 = 135°C, TR-2 = 175°C, TR-3 = 252°C
Dehydration ratio at first dehydration part: 62%
Upper limit of polymer to be supplied to compression dehydration extruder (300 rpm): 14.3 kg/he (dry base)

Then, a mixture of 1600 parts of this pellet and 2400 parts of a methacrylic resin (ACRYPET VH) was melted and kneaded to be pelletized under the same conditions as in Example 1 to obtain an impact resistant acrylic resin having a content of a rubber-like elastomer of 25%, and this resin was injection molded. The evaluation results are shown in Table 2.

[Example 4]

The same procedure as in Example 1 was conducted except that the amount of t-butyl hydroperoxide was changed to 0.07 parts in the mixture (b), and the amount of methyl methacrylate was changed to 76.0 parts (95.0%), the amount of methyl acrylate was changed to 4.0 parts (5.0%), the amount of t-butyl hydroperoxide was changed to 0.15 parts and the amount of n-octylmercaptan was changed to 0.25 parts in the mixture (f), to obtain a white acrylic multi-layer polymer (A-4) having a water content of 55%. The properties and conditions of the coagulated powder of the acrylic multi-layer polymer (A-4) are shown in Table 1.
Then, the acrylic multi-layer polymer (A-4) was fed to a compression dehydration extruder under conditions described below, to obtain an impact resistant acrylic polymer (rubber-like elastomer content 55.6%, acetone-insoluble content 93%) in the form of a pellet. This pellet had excellent configuration which had been completely melted and contained no bubble.

Compression dehydration extrusion conditions:

Cylinder temperature, dice temperature and screw rotational speed are the same as in Example 1.

Raw material feed rate: 13.2 kg/hr (dry base)

**14**

Resin temperature: TR-1 = 153°C, TR-2 = 182°C, TR-3 = 260°C
Dehydration ratio at first dehydration part: 62%
Upper limit of polymer to be supplied to compression dehydration extruder (300 rpm): 13.8 kg/he (dry base)

Then, a mixture of 1800 parts of this pellet and 2200 parts of a methacrylic resin (ACRYPET VH) was melted and kneaded to be pelletized under the same conditions as in Example 1 to obtain an impact resistant acrylic resin having a content of a rubber-like elastomer of 25%, and this resin was injection molded. The evaluation results are shown in Table 2.

[Example 5]

The same procedure as in Example 1 was conducted except that the amount of methyl methacrylate was changed to 19.0 parts (95.0%), the amount of methyl acrylate was changed to 1.0 parts (5.0%), the amount of t-butyl hydroperoxide was changed to 0.04 parts and the amount of n-octylmercaptan was changed to 0.0 part in the mixture (f), to obtain a white acrylic multi-layer polymer (A-5) having a water content of 43%. The properties and conditions of the coagulated powder of the acrylic multi-layer polymer (A-5) are shown in Table 1.
Then, the acrylic multi-layer polymer (A-5) was fed to a compression dehydration extruder under conditions described below, to obtain an impact resistant acrylic polymer (acrylic rubber-like elastomer content 83.3%, acetone-insoluble content 95%) in the form of a pellet. This pellet was in excellent form which had been completely melted and contained no bubble.

Compression dehydration extrusion conditions:

Cylinder temperature: C1 = 120°C (barrel block No. 3), C2 = 130°C (barrel block No. 4), C3 = 160°C (barrel block No. 6), C4 = 230°C (barrel block No. 8), C5 = 230°C (barrel blocks No. 9, No. 10)
Dice temperature: 240°C
Screw rotational speed: 300 rpm
Raw material feed rate: 12.6 kg/hr (dry base)
Resin temperature: TR-1 = 165°C, TR-2 = 190°C, TR-3 = 248°C
Dehydration ratio at first dehydration part: 62%
Upper limit of polymer to be supplied to compression dehydration extruder (300 rpm): 14.0 kg/he (dry base)

Then, a mixture of 1205 parts of this pellet and 2795 parts of a methacrylic resin (ACRYPET VH) was melted and kneaded to be pelletized under the same conditions as in Example 1 to obtain an impact resistant acrylic resin having a content of an acrylic rubber-like elastomer of 25%, and the resin was injection molded. The evaluation results are shown in Table 2.

[Example 6]

A 2.6% aqueous magnesium sulfate solution was charged as a recovering agent, heated up to 90°C with mixing and stirring, to this solution was added the latex (L-2) produced previously in Example 2 continuously at a linear speed of 0.4 to 0.5 m/s, then, the mixture was kept for 30 minutes. After cooled to room temperature, the polymer was filtered by a centrifugal dehydration machine while washing with distilled water in amount of 7-times per polymer, to obtain a white acrylic multi-layer polymer (A-6) having a water content of 84%. The properties and conditions of the coagulated powder of the acrylic multi-layer polymer (A-6) are shown in Table 1.
Then, the acrylic multi-layer polymer (A-6) was fed to a compression dehydration extruder under the conditions of cylinder temperature, dice temperature and screw rotational speed in Example 2. Though an excellent pellet which had been completely melted was obtained, upper limit of polymer to be supplied to compression dehydration extrusion was as low as 8.0 kg/hr (dry base).

[Example 7]

A 2.6% aqueous magnesium sulfate solution was charged as a recovering agent, heated up to 90°C with mixing and stirring, to this solution was added the latex (L-2) produced previously in Example 2 continuously at a linear speed of 0.4 to 0.5 m/s, then, the mixture was kept for 30 minutes. The herein resulted slurry was further transferred to a glass lining reactor in which pressure treatment is possible, and kept under pressurized condition at 130°C for 30 minutes. After cooled to room temperature, the polymer coagulated was filtered by a centrifugal dehydration machine while washing with distilled water in amount of 7-times by weight per weight of the polymer, to obtain a white acrylic multi-layer polymer (A-7) having a water content of 38%. The properties and conditions of the coagulated powder of the acrylic multi-layer polymer (A-7) are shown in Table 1.

Then, the acrylic multi-layer polymer (A-7) was fed to a compression dehydration extruder under the same conditions of cylinder temperature, dice temperature and screw rotational speed in Example 2. An excellent pellet which had been completely melted was obtained, and upper limit of polymer to be supplied to compression dehydration extruder was 13.8 kg/hr (dry base) which was approximately the same as in Example 2.

[Example 8]

A 1.8% aqueous calcium acetate solution was charged as a recovering agent, heated up to 90°C with mixing and stirring, to this solution was added the latex (L-2) produced previously in Example 2 continuously at a linear speed of 0.4 to 0.5 m/s, then, the mixture was kept for 30 minutes. After cooled to room temperature, the polymer coagulated was filtered by a centrifugal dehydration machine while washing with distilled water in amount of 7-times by weight per weight of the polymer. This polymer was further stirred by using a large scale Henschel mixer, to obtain a finer ground white acrylic multi-layer polymer (A-8) having a water content of 53%. The properties and conditions of the coagulated powder of the acrylic multi-layer polymer (A-8) are shown in Table 1.

Then, the acrylic multi-layer polymer (A-8) was fed to a compression dehydration extruder under the same conditions of cylinder temperature, dice temperature and screw rotational speed in Example 2. Though an excellent pellet which had been completely melted was obtained, upper limit of polymer to be supplied to compression dehydration extruder was as low as 7.0 kg/hr (dry base).

[Example 9]

The acrylic multi-layer polymer (A-2) obtained in Example 2 and a phosphorus-based compound tris(2,4-di-t-butylphenyl) phosphite [ADECASTUB 2112 manufactured by Asahi Denka Kogyo K. K.] were fed to a compression dehydration extruder so as to obtain compounding amounts shown in Table 3, the mixture was subjected to shaping under the same extrusion conditions as in Example 2, to obtain an impact resistant acrylic polymer in the form of a pellet. Then, this pellet was compounded with a methacrylic resin (ACRYPET VH) under the same conditions as in Example 2, to obtain an impact resistant acrylic resin having a content of an acrylic rubber-like elastomer of 25%, and this resin was injection molded. The evaluation results are shown in Table 3.

[Examples 10 to 15]

An impact resistant acrylic polymer pellet was obtained in the same manner as in Example 9, except that the kind and amount compounded of an organic stabilizer (Y) were changed as shown in Table 3. Then, this pellet and a methacrylic resin (ACRYPET VH) were compounded under the same conditions as in Example 2, to obtain an impact resistant acrylic resin having a content of an acrylic rubber-like elastomer of 25%, and this resin was injection molded. The evaluation results are shown in Table 3.

[Example 16]

The latex (L-2) produced in Example 2 was used and coagulation was conducted under the same conditions as in Example 2, to obtain a slurry. After cooled to room temperature, the polymer coagulated was filtered by a centrifugal dehydration machine while washing with distilled water in amount of 3-times by weight per weight of the polymer, to obtain a white acrylic multi-layer polymer (A-16).

Then, the acrylic multi-layer polymer (A-16) was fed to a compression dehydration extruder under the same conditions of cylinder temperature, dice temperature and screw rotation in Example 2, and an impact resistant acrylic polymer pellet was obtained in the same manner as in Example 9. Then, this pellet and a methacrylic resin (ACRYPET VH) were compounded under the same conditions as in Example 2, to obtain impact resistant acrylic resin having a content of an acrylic rubber-like elastomer of 25%, and this resin was injection molded. Yellowish color was recognized on the resulted molded plate. The evaluation results are shown in Table 2.

[Example 17]

The acrylic multi-layer polymer (A-2) obtained in Example 2 was fed to a compression dehydration extruder under the same conditions of cylinder temperature, dice temperature and screw rotation in Example 2.

When the screw rotational speed was controlled to 330 rpm, the dehydration ratio in a first dehydration part was 50%, and bubble was observed in the resulted pellet.

[Example 18]

The acrylic multi-layer polymer (A-2) obtained in Example 2 was fed to a compression dehydration extruder under the same conditions of cylinder temperature, dice temperature and screw rotation in Example 2.

When the screw rotational speed was controlled to 380 rpm, the dehydration ratio in a first dehydration part was 40%, and bubble in larger amount than that in Example 17 was observed in the resulted pellet.

Table 1

| | Acrylic Multi-Layer Polymer | Coagu-lating Agent | Properties and Conditions of Coagulated Powder | | | Rubber Pellet | | | 1) Upper Limit of Polymer to be Supplied to Compression Dehydration Extruder |
|---|---|---|---|---|---|---|---|---|---|
| | | | Average Particle Size ($\mu$ m) | Volume of Voids Having a Pore Size of 5 $\mu$ m or less (ml/g) | Amount of Fine Powders Having a Particle Size of 212 $\mu$ m or less (%) | Content of Rubber-Like Elastomer | Content of Acetone-Insoluble Part | Appearance of Pellet | |
| Ex.1 | A-1 | Calcium acetate | 530 | 0.57 | 21 | 62.5% | 75% | No bubble | 14.3 |
| Ex.2 | A-2 | Calcium acetate | 470 | 0.62 | 23 | 62.5% | 89% | No bubble | 14.0 |
| Ex.3 | A-3 | Calcium acetate | 450 | 0.65 | 30 | 62.5% | 96% | No bubble | 14.3 |
| Ex.4 | A-4 | Calcium acetate | 500 | 0.59 | 32 | 55.6% | 93% | No bubble | 13.8 |
| Ex.5 | A-5 | Calcium acetate | 650 | 0.52 | 24 | 83.3% | 95% | No bubble | 14.0 |
| Ex.6 | A-6 | Magnesium acetate | 450 | 1.05 | 25 | 62.5% | 89% | No bubble | 8.0 |
| Ex.7 | A-7 | Magnesium sulfate + Solidifi-cation with Pressure | 470 | 0.35 | 25 | 62.5% | 89% | No bubble | 13.8 |
| Ex.8 | A-8 | Calcium acetate → Henschel Grinding | 190 | 0.61 | 65 | 62.5% | 89% | No bubble | 7.0 |

1)Upper Limit of Polymer to be Supplied to Compression Dehydration Extruder was calculated at a screw rotation of 300 rpm.

EP 1 095 954 A1

Table 2

| | Acrylic Multi-Layer Polymer | Remaining Metal Ca Amount (ppm) | Total Trans-parency (%) | Cloudi-ness Value (Haze) (%) | Yellow Index (-) | Izod Impact Strength (kg-cm/cm$^2$) | Appear-ance of Molded Article | Thermal Decompo-sition Resist-ance | Weather Resist-ance |
|---|---|---|---|---|---|---|---|---|---|
| Ex.1 | A-1 | 400 | 92.7 | 0.9 | 0.7 | 4.8 | ○ | △ | △ |
| Ex.2 | A-2 | 550 | 93.1 | 0.8 | 0.8 | 5.0 | ○ | △ | △ |
| Ex.3 | A-3 | 450 | 93.5 | 0.8 | 0.7 | 5.3 | ○ | △ | △ |
| Ex.4 | A-4 | 500 | 92.0 | 0.9 | 1.0 | 4.8 | ○ | △ | △ |
| Ex.5 | A-5 | 500 | 92.5 | 1.1 | 0.9 | 4.5 | ○ | △ | △ |
| Ex.16 | A-16 | 1200 | 91.5 | 1.2 | 1.7 | 4.9 | △ | △ | △ |

Table 3

| | Kind and Amount Compounded of Organic Stabilizer (part) | | | Total Trans-parency (%) | Cloud iness Value Haze (%) | Yellow Index (~) | Izod Impact Strength (kg-cm/cm$^2$) | Appear-ance of Molded Article | Thermal Decomp-osition Resis-tance | Weather Resis-tance |
|---|---|---|---|---|---|---|---|---|---|---|
| | Phosphorus Compound ADECASTUB 2112 | Hindered Phenol-Based Compound ADECASTUB AO-60 | Hindered Amine-Based Compound ADECASTUB LA-77 | | | | | | | |
| Ex.9 | 0.3 | - | - | 93.0 | 0.7 | 0.6 | 4.9 | ◎ | △ | △ |
| Ex.10 | - | 0.3 | - | 92.5 | 0.9 | 0.7 | 5.1 | ○ | ○ | △ |
| Ex.11 | - | - | 0.3 | 92.6 | 0.9 | 0.7 | 5.0 | ○ | △ | ○ |
| Ex.12 | 0.3 | 0.3 | - | 93.1 | 0.8 | 0.6 | 4.9 | ◎ | ○ | △ |
| Ex.13 | 0.3 | - | 0.3 | 93.3 | 0.8 | 0.6 | 5.0 | ◎ | △ | ○ |
| Ex.14 | - | 0.3 | 0.3 | 92.7 | 0.9 | 0.7 | 4.9 | ○ | ○ | ○ |
| Ex.15 | 0.3 | 0.3 | 0.3 | 93.2 | 0.8 | 0.6 | 4.9 | ◎ | ○ | ○ |

(Note)

1. The amount compounded of an organic stabilizer represents a value per 100 parts by weight of the acrylic multi-layer polymer.

2. ADECASTUB 2112: manufactured by Asahi Denka Kogyo K.K.: tris(2,4-di-t-butylphenyl) phosphite

3. ADECASTUB AO-60: manufactured by Asahi Denka Kogyo K.K.: tetrakis[methylene-3-(3,5-di-t-butyl-4-hydroxyphenyl)propionate]methane

4. ADECASTUB LA-77: manufactured by Asahi Denka Kogyo K.K.: bis(2,2,6,6-tetramethyl-4-piperidyl) 1,8-octane dicarboxylate

EP 1 095 954 A1

**Claims**

1. An impact resistant acrylic polymer pellet comprising an acrylic multi-layer polymer having at least one rubber-like elastomer layer (α) as an inner layer and having a rigid polymer layer (β) as an outermost layer which is containing methyl methacrylate as a main component, wherein the proportion of parts insoluble in acetone including the polymer of the rubber-like elastomer layer (α) is from 70 to 97% by weight per unit weight of the pellet.

2. The impact resistant acrylic polymer pellet according to Claim 1, wherein the proportion of the rubber-like elastomer is from 50 to 90% by weight per unit weight of the pellet.

3. The impact resistant acrylic polymer pellet according to Claim 1, wherein the polymer constituting the rubber-like elastomer layer (α) is a polymer which shows a glass transition temperature of 25°C or less in the case of homopolymerization; and the polymer constituting the rigid polymer layer (β) is a polymer which shows a glass transition temperature of 50°C or more in the case of homopolymerization.

4. The impact resistant acrylic polymer pellet according to Claim 1, wherein the rubber-like elastomer layer (α) is constituted from a polymer obtained by polymerizing 100 parts by weight of a monomer mixture composed of 40 to 90% by weight of an alkyl acrylate having an alkyl group of 8 or less carbon atoms and 10 to 60% by weight of a monofunctional monomer having one vinyl group which can be copolymerized with the alkyl acrylate, 0.1 to 10 parts by weight of a graft-linking agent, and 0.1 to 10 parts by weight of a multifunctional cross-linking agent having at least two vinyl groups; and the rigid polymer layer (β) is constituted from a polymer obtained by polymerizing a monomer or monomer mixture composed of 60 to 100% by weight of an alkyl methacrylate having an alkyl group of 4 or less carbon atoms and 0 to 40% by weight of an unsaturated monomer which can be copolymerized with the alkyl methacrylate.

5. The impact resistant acrylic polymer pellet according to Claim 1, wherein the proportion of the ridid polymer layer (β) in the acrylic multi-layer polymer is from 10 to 50% by weight.

6. A method for producing the impact resistant acrylic polymer pellet of the Claim 1, comprising:

   a step of feeding a water-containing polymer (X) or a mixture of a water-containing polymer (X) with at least one organic stabilizer (Y) to a compression dehydration extruder,
   wherein said water-containing polymer (X) is a polymer obtained by coagulating the emulsified latex of an acrylic multi-layer polymer containing a rubber-like elastomer, and is able to provide an acrylic multi-layer polymer which contains 40% by weight or less of fine powders having particle size of 212 μm or less after drying and shows a volume of voids having pore size is 5 μm or less being 0.7 ml or less per one gram of dired polymer measured by a mercury pressure method after drying,
   said organic stabilizer (Y) is selected from the group consisting of a phosphorus-based compound, a hindered phenol-based compound and a hindered amine-based compound, and
   said compression dehydration extruder comprises a dehydration part having at least one dehydration slit, a compression part for removing liquid substances from the water-containing polymer (X) and a deaeration part for discharging vaporized substances; and,
   steps of dehydrating, drying, melting and extruding the water-containing polymer(X) or the mixture to form the pellet.

7. The method according to Claim 6, wherein the amount of water discharged in a first dehydration part of the compression dehydration extruder is 55% or more based on the amount of water contained in the water-containing polymer (X).

8. The method according to Claim 6, wherein the maximum resin temperature in the compression dehydration extruder is from 200°C to 300°C.

9. The method according to Claim 6, wherein the amount of alkaline earth metals derived from coagulation of the emulsified latex of the acrylic multi-layer polymer is 700 ppm or less.

10. The method according to Claim 6, wherein the emulsified latex of the acrylic multi-layer polymer is poured at a linear speed of 0.5 m/s or less into a coagulating agent solution of 1.8 to 5.0% aqueous calcium acetate solution at a temperature of 90°C or more to be coagulated, and the resulted slurry is washed with distilled water in amount of 5-times by weight or more per weight of the polymer, then it is dehydrated to produce a water-containing polymer (X).

# FIG. 1

FIG. 2

# INTERNATIONAL SEARCH REPORT

| International application No. |
|---|
| PCT/JP98/02664 |

| A. CLASSIFICATION OF SUBJECT MATTER |
|---|
| Int.Cl⁶ C08F291/00, C08F265/06 // (C08F291/00, C08F220:14) (C08F265/06, C08F220:14) |
| According to International Patent Classification (IPC) or to both national classification and IPC |

| B. FIELDS SEARCHED |
|---|
| Minimum documentation searched (classification system followed by classification symbols) Int.Cl⁶ C08F251/00-292/00 |
| Documentation searched other than minimum documentation to the extent that such documents are included in the fields searched |
| Electronic data base consulted during the international search (name of data base and, where practicable, search terms used) |

## C. DOCUMENTS CONSIDERED TO BE RELEVANT

| Category* | Citation of document, with indication, where appropriate, of the relevant passages | Relevant to claim No. |
|---|---|---|
| X | JP, 8-245854, A (Mitsubishi Rayon Co., Ltd.), 24 September, 1996 (24. 09. 96), Claims (Family: none) | 1-10 |
| X Y | JP, 5-194680, A (Rohm and Haas Co.), 3 August, 1993 (03. 08. 93), Claims & EP, 527605, A1 & US, 5312575, A | 1-5 6-10 |
| X Y | JP, 5-17654, A (Kaneka Corp.), 26 January, 1993 (26. 01. 93), Claims (Family: none) | 1-5 6-10 |
| X Y | JP, 2-225510, A (Takeda Chemical Industries, Ltd.), 7 September, 1990 (07. 09. 90), Claims ; page 4, upper left column, lines 7 to 10, lower right column, lines 2, 3 & EP, 368244, A2 & US, 5183859, A | 1-5 6-10 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search 26 August, 1998 (26. 08. 98) | Date of mailing of the international search report 8 September, 1998 (08. 09. 98) |
|---|---|
| Name and mailing address of the ISA/ Japanese Patent Office | Authorized officer |
| Facsimile No. | Telephone No. |

Form PCT/ISA/210 (second sheet) (July 1992)

25